# EUROPEAN PATENT SPECIFICATION

(11) **EP 1 101 644 B1**
(45) Date of publication and mention of the grant of the patent: **20.08.2003**
(21) Application number: 01102768.7
(22) Date of filing: 13.01.1998
(51) Int. Cl.: B60K 7/00, B60K 17/22, B60K 17/04

(54) **Low floor drive unit assembly for an electrically driven vehicle**
Antriebseinheit für ein elektrisch angetriebenes Niederflurfahrzeug
Ensemble d'unité de transmission à faible garde au sol pour véhicule électrique

(30) Priority: 18.02.1997 US 801531; 18.02.1997 US 801532; 18.02.1997 US 801536
(43) Date of publication of application: 23.05.2001
(62) Divisional of application: 98902488.0
(73) Proprietor: Meritor Heavy Vehicle Systems, LLC, Troy, MI 48084 (US)
(72) Inventor: Ruppert, Malcolm F. Jr., Hebron, OH 43025 (US); Brill, Lawrence Doyle, Westerville, OH 43081 (US); Sullivan, William Carl, Newark, OH 43055 (US); Swanson, Glen E., Westerville, OH 43082 (US)
(74) Representative: Sties, Jochen, Dipl.-Ing.

(56) References cited:
- DE-A- 4 322 517
- DE-C- 4 112 624
- GB-A- 502 313
- US-A- 1 543 044
- US-A- 3 161 083
- US-A- 4 089 384
- US-A- 4 469 369
- US-A- 4 658 189

## Description

### BACKGROUND OF THE INVENTION

This invention relates to a unique drive arrangement for electrically driving the wheels of a vehicle in such a way that the floor of the vehicle may be lower than was the case in the prior art.

Mass transit vehicles, such as a bus or trolley car, typically have seats aligned at the lateral sides of the vehicle, with a central aisle extending along the vehicle. The seats are typically at a higher vertical location than the aisle, and thus cover the wheels. It would be desirable to have the aisle positioned relatively low to the ground. This would provide increased passenger space within the body of the vehicle, and may allow the designer to reduce the overall height of the mass transit vehicle. Other advantages to having a lower floor position include improved handicapped access and greater ease in the loading and unloading of passengers.

Mass transit vehicles typically have several axles which support and drive or steer the vehicle. If the axle is a driving axle, then electric motors can be used to generate torque to drive the wheels. In a typical configuration, a centrally located electric motor drives two opposed wheels at the sides of the vehicle by way of a conventional axle. Usually, transmissions or drive shafts extend from the central motor to the axle.

In the prior art, there are relatively large motor, transmission, or axle elements directly below the center of the vehicle. The aisle is typically in the center of the vehicle and normally goes over the axle, thus requiring the floor of the aisle to be relatively high. One known bus moves the floor up by steps over the axle. It is undesirable, however, to have passengers climb steps to reach the aisle and seating areas.

An example of a prior art drive as mentioned above can be found in US-A-4,270,622.

US-A-1,543,044 discloses a power transmission for motor vehicles. A drive axle comprises two electric motors arranged vertically. Each motor drives an associated wheel via a pinion and a bevel gear independently from the other motor.

A drive unit in accordance with the features of the preamble of claim 1 is known from US-A-3 161 083.

The subject invention relates to an automotive vehicle drive unit according to claim 1.

This invention improves packaging and increases passenger compartment size by moving the electric motors to the sides of the vehicle. This allows the interior vehicle floor to be lowered between the motors resulting in improved utilization of the passenger compartment. Also, the flexibility of mounting the electric motors at various angles with respect to the axis of rotation of the first and second driving axles results in flexible packaging designs for other vehicle components. Also, by mounting the electric motors to existing structures on the axle, a weight savings occurs because additional brackets and mounting supports are not required. Finally, by mounting the bevel gear and motor on opposing sides of the axis of rotation, the longitudinal distance through which the motor and its associated gearing extends is minimized so that the floor must only extend upwardly to surround the wheel and the motor for a minimal longitudinal distance.

### BRIEF DESCRIPTION OF THE DRAWINGS

Other advantages of the present invention will be readily appreciated as the same becomes better understood by reference to the following detailed description when considered in connection with the accompanying drawings wherein:
Figure 1 is a cross sectional view of a vehicle incorporating the subject invention;
Figure 2A is a cross sectional view taken along line 2-2 of Figure 1, showing a first electric motor arrangement;
Figure 2B is a view like Figure 2A, but showing an alternative electric motor arrangement;
Figure 3 is a fragmentary view from the inside of the left wheel hub as shown in Figure 2, partially broken away and in cross section, and showing a first embodiment of an electric motor arrangement;
Figure 4 is a cross section view from the front of the left wheel as shown in Figure 3, and showing the first embodiment of an electric motor mounting arrangement;
Figure 5 is a view like Figure 3 but showing an alternative electric motor mounting arrangement;
Figure 6 is a view like Figure 4 but showing the alternative electric motor mounting arrangement;
Figure 7 is a view like Figure 3 but showing an additional electric motor;
Figure 8 is a cross sectional view of a gear box showing an alternative embodiment incorporating a planetary gear set;
Figure 9 is similar to Figure 2A but shows the method of mounting the electric motors to suspension beams;
Figure 10A is a fragmentary view from the inside of the left wheel hub as shown in Figure 9, partially broken away and in cross section, and showing a first embodiment of a flexible coupling;
Figure 10B is a cross-sectional view through the coupling of Figure 10A;
Figure 11 is a view similar to Figure 10A but showing an alternative flexible coupling;
Figure 12 shows an alternative coupling; and
Figure 13 shows details of the mounting of the coupling shown in Figure 12.

### DETAILED DESCRIPTION OF a PREFERRED EMBODIMENT

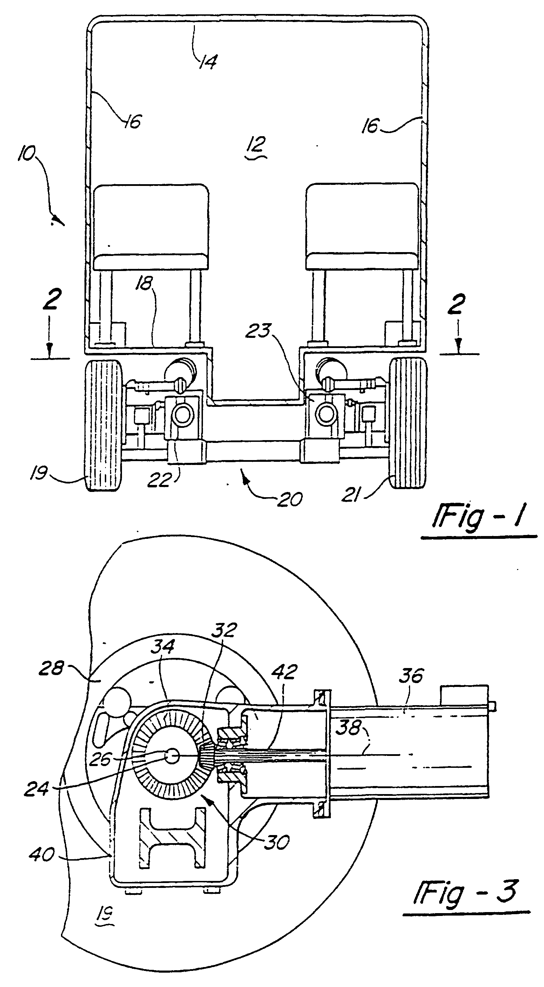

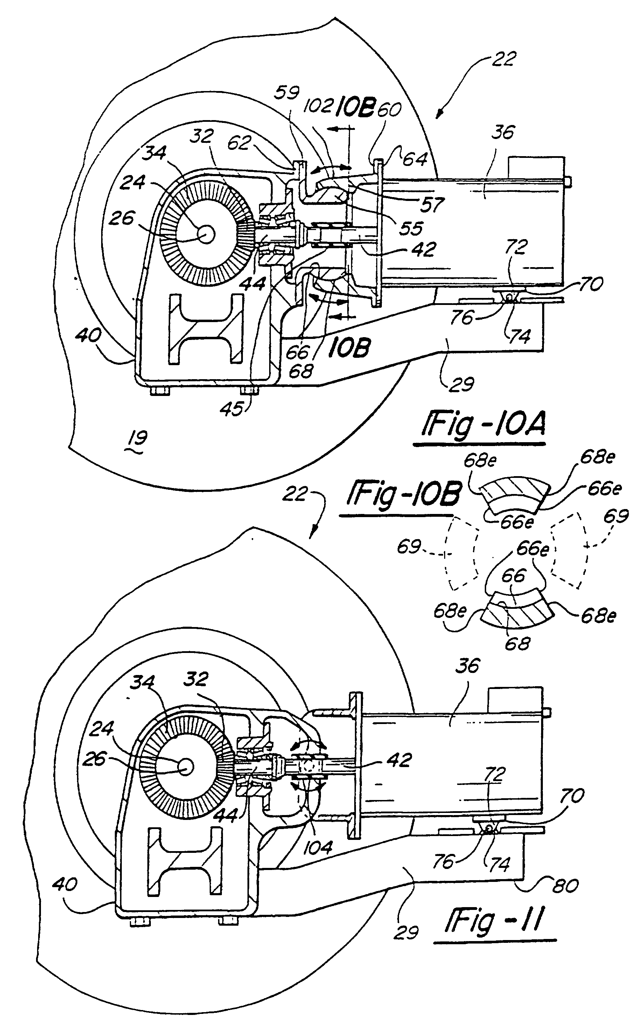

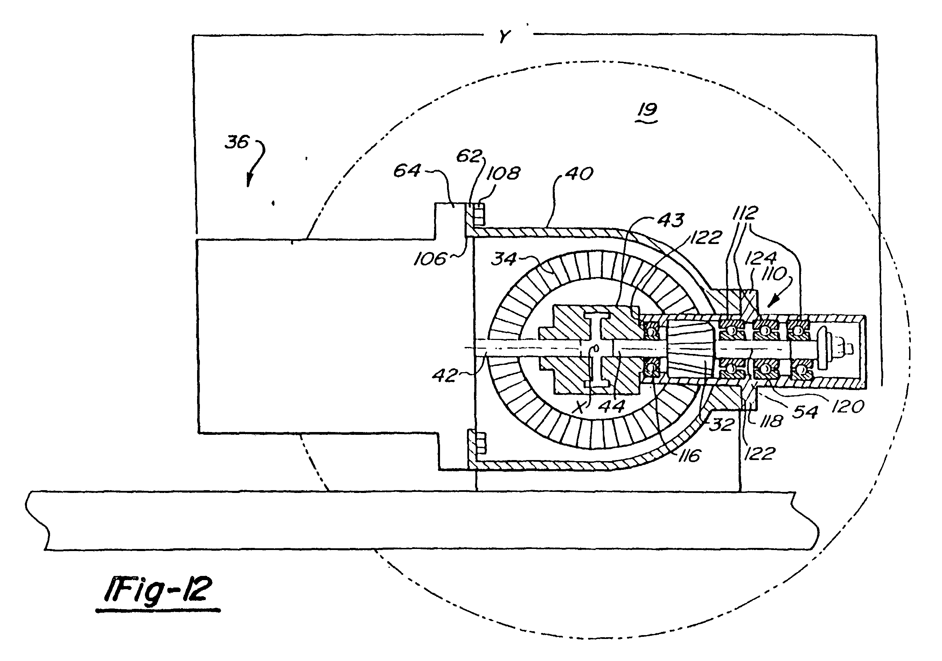

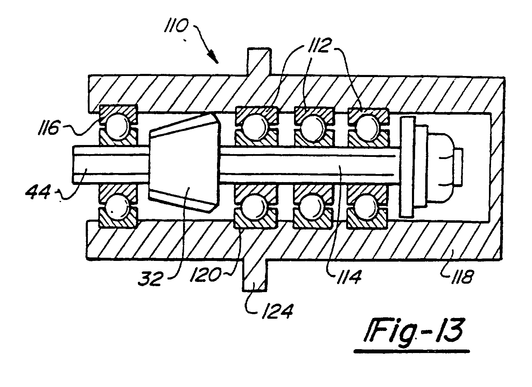

The details in the drawings concerned with the suspension shown in Figures, the flexible coupling shown in Figures 10 to 11 and the particular construction shown in figures 12 and 13 are not part of the invention. Referring to the Figures, wherein like numerals indicate like or corresponding parts throughout the several views, an automotive vehicle is shown generally at 10. As shown in Figure 1, automotive vehicle 10 includes a passenger compartment 12 defined by a roof 14, two side walls 16, and a vehicle floor 18. A pair of wheels 19, 21 are driven by an automotive vehicle drive unit assembly, generally shown at 20, which has a first unit 22 and a second unit 23. It should be understood that vehicle 10 is typically provided with a pair of drive units and several pairs of wheels.

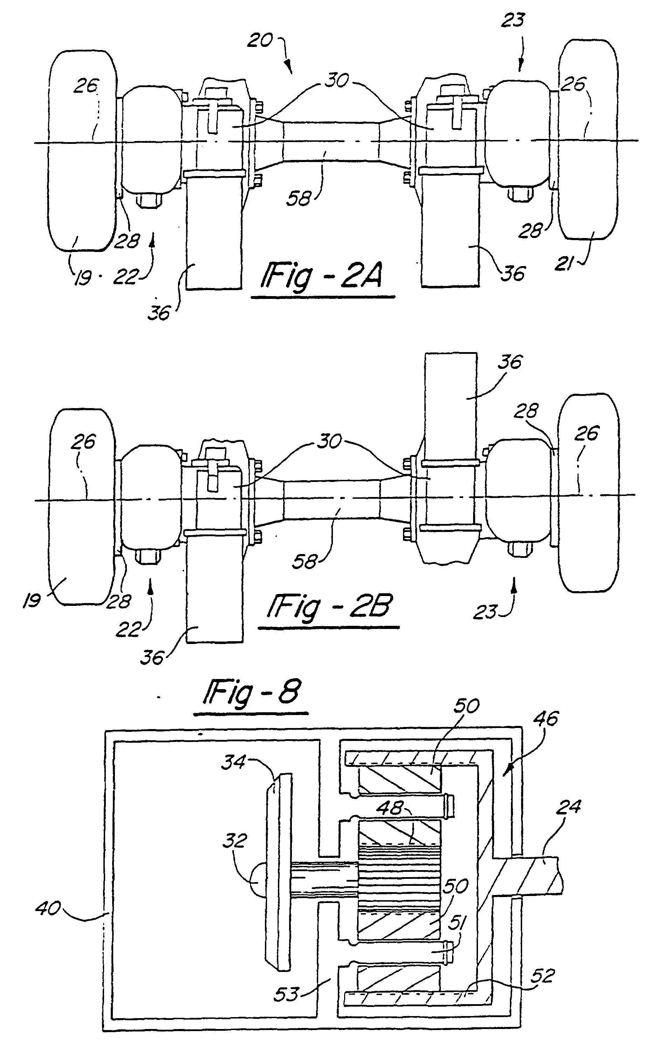

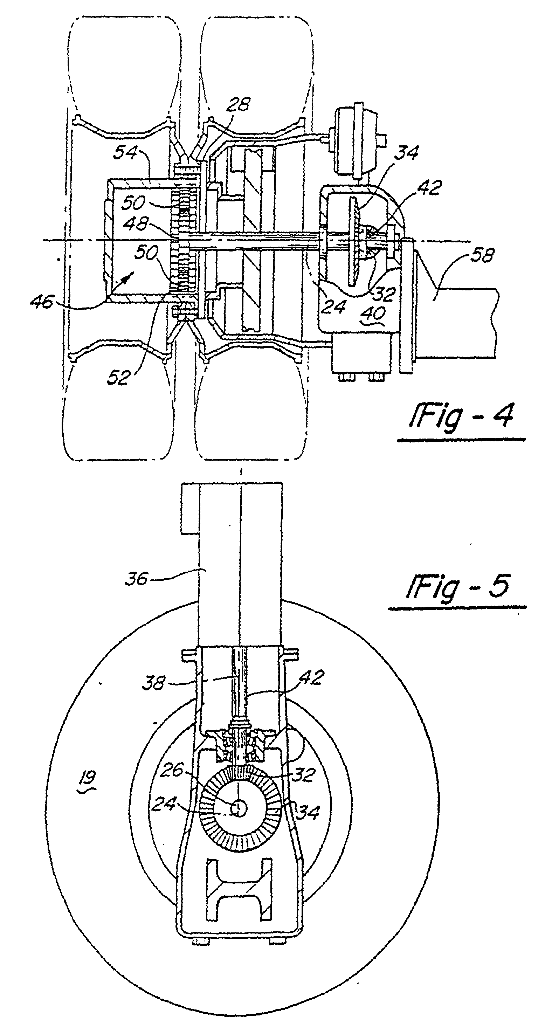

As shown in Figure 2A, the first 22 and second 23 units define an axis of rotation 26. A first driving axle shaft 24, shown in Figure 3, drives a first wheel hub 28 which revolves about the axis 26 of rotation for the first driving axle shaft 24.

A first gear set 30, located adjacent to the first wheel 19, is comprised of a pinion gear 32 and a ring gear 34 which together drive the first wheel hub 28. A first electric motor 36, defining a motor axis of rotation 38, is mounted at a non-parallel angle relative to the axis of rotation 26 of the first driving axle shaft 24. The first electric motor 36 is shown mounted in a horizontal position such that the motor axis of rotation 38 is parallel to the vehicle floor 18 and is perpendicular to the axis of rotation 26 of the first driving axle shaft 24.

As shown in Figure 2A, drive unit assembly 20 further includes a second unit 23 comprising a second driving axle shaft 24, a second wheel hub 28, a second gear set 30, and a second electric motor 36. It is understood that the second unit 23 is a mirror image of the first unit 22. A beam 58 provides a fixed housing extending between the first 22 and second 23 units.

The first 36 and second 36 electric motors can be mounted in various different positions relative to each other. As shown in Figure 2A, the first 36 and second 36 electric motors can be mounted in a generally horizontal position with both electric motors 36 extending forwardly from the beam 58. Where packaging would allow, the electric motors 36 can also be mounted such that they both extend rearwardly from the beam 58. As shown in Figure 2B, the first 36 and second 36 electric motors can be mounted in a generally horizontal position with the first electric motor 36 extending in a forwardly direction relative to beam 58 while the second electric motor 36 extends in a rearwardly direction relative to beam 58. Arranging the configuration so that one electric motor 36 extends forwardly while the other electric motor 36 extends rearwardly can resolve electric motor weight balance issues that arise when both motors extend in the same direction from the beam 58.

As can be seen in Figure 3 and 4, a first gear box 40 houses the first gear set 30 and is rigidly connected to the first electric motor 36. A motor drive shaft 42 extends from the electric motor 36, along the motor axis of rotation 38, and drives the pinion gear 32. The pinion gear 32 meshes with the ring gear 34 which revolves about the axis 26 of the driving axle shaft 24. As the ring gear 34 rotates, it drives the driving axle shaft 24 which turns the wheel hub 28. As can be seen in Figure 4, gear box 40 is fixed to beam 58.

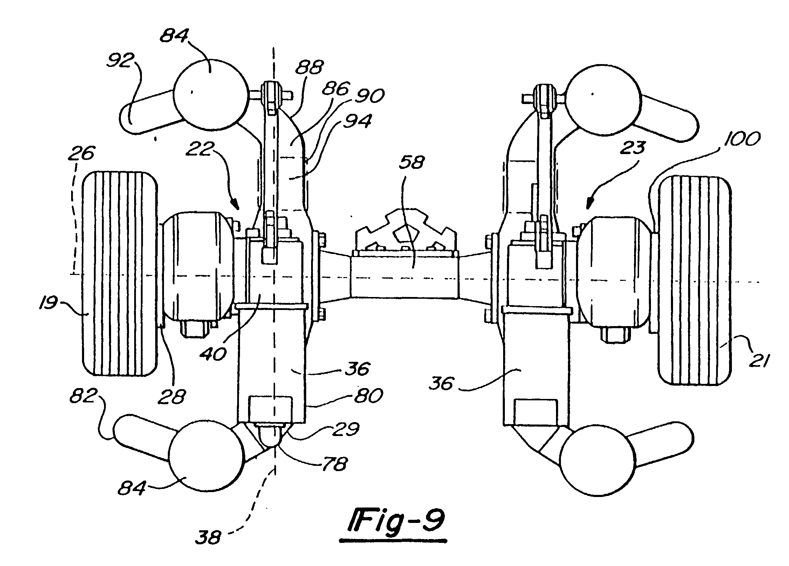

A planetary gear set, shown generally at 46 in Figure 4, is used to achieve greater overall gear reduction. The planetary gear set 46 can either be located adjacent to the wheel hub 28 or can be incorporated into the gear box 40. The planetary gear set 46 shown in Figure 4 is located adjacent to the first wheel hub 28 and is driven by the first driving axle shaft 24. The planetary gear set 46 shown in Figure 8 is incorporated into the gear box 40. Regardless of its location, the planetary gear set 46 includes a sun gear 48, planet gears 50, and a ring gear hub 52. Each planet gear 50 is attached to a single planetary spider 53 by a corresponding planet pin 51, thus forming a planet gear assembly, as shown in the enlarged view of the planetary gear set 46 in Figure 8. The planet gear assembly is inserted into the ring gear hub 52 such that the teeth of the planet gears 50 mesh with the teeth of the ring gear hub 52.

In a typical configuration there are three planet gears 50 in a planet gear assembly but it is understood that a different number of planet gears 50 can be used. When the planetary gear set 46 is located adjacent to the wheel hub 28, as shown in Figure 4, the sun gear 48 is attached to and driven by the first driving axle shaft 24. As the sun gear 48 rotates, it meshes simultaneously with each of the planet gears 50 in the planet gear assembly. The planet gears 50 mesh with the ring gear hub 52 which results in the turning of the first wheel hub 28. In Figure 4, the entire planetary gear set 46 is shown housed within a planetary hub 54 located adjacent to the first wheel hub 28. As shown in Figure 8, the planetary gear set 46 can also be incorporated into the gear box 40 instead of being located adjacent to the wheel hub 28. Incorporating the planetary gear set 46 into the gear box 40 is a unique location for the planetary gear set 46. Typically, this location has been used by a differential which includes a ring gear and a pinion gear which drive axle shafts which in turn drive the wheels. With independent electric motors 36 there is no need for a differential or for any direct mechanical link between opposing wheels. By incorporating the planetary gear set 46 into the gear box 40, the need for a planetary hub 54 is eliminated which decreases 'the vehicle weight, gives a broader selection of wheel equipment and wheel end features, and reduces overall cost.

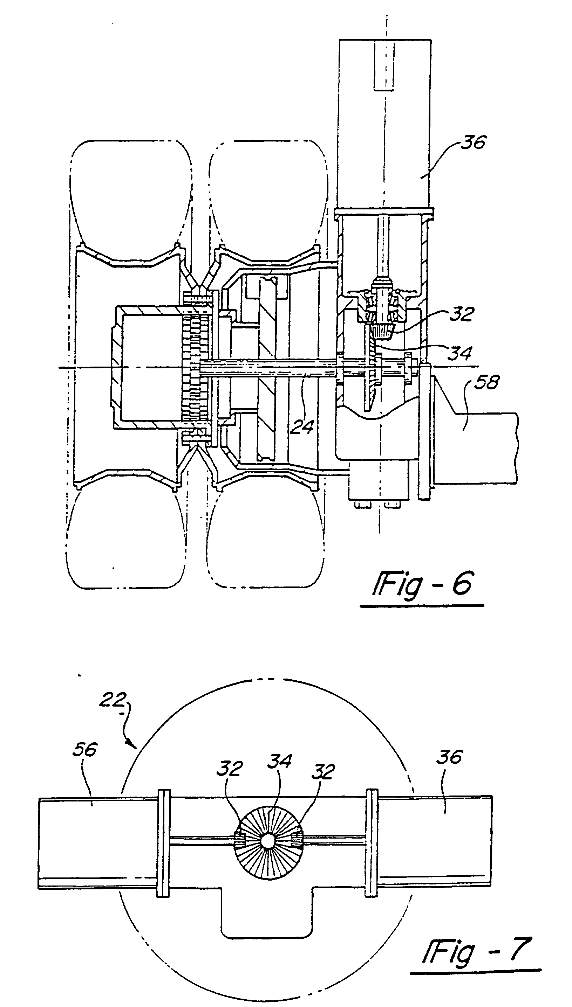

Figure 5 and 6 show an alternate embodiment of the mounting arrangement for the first electric motor 36. The first electric motor 36 is shown mounted in a vertical position such that the motor axis of rotation 38 is perpendicular to the vehicle floor 18 and is perpendicular to the axis of rotation 26 of the first driving axle shaft 24. In a typical configuration, the first electric motor 36 is mounted either in a horizontal or vertical position. However, the electric motor 36 can be mounted at any angle with respect to the vehicle floor 18 and the axis of rotation 26 of the first driving axle shaft 24.

Figure 7 shows an alternate embodiment of the drive unit assembly 20 in which the first unit 22 includes a third electric motor 56, in parallel driving relationship with the first electric motor 36. The third electric motor 56 is also used to drive the first gear set 30. The second unit 23 is a mirror image of the first unit 22 and includes a fourth electric motor 56, in parallel driving relationship with the second electric motor 36. The fourth electric motor 56 is use to drive the second gear set 30. The use of a third 56 and fourth electric motor 56, where packaging space is available, allows smaller gears and motors to be used, thus reducing the necessary size for the system.

With the present invention, the benefits as shown in particular in Figure 1 are achieved. By mounting the motors at the sides of the vehicle, the center of the vehicle floor may be lowered significantly than compared to the prior art. In addition, since the motors themselves are connected to drive the wheels to a non-parallel angle, they do not extend towards the center of the vehicle from the wheel for any undue amount. Thus, the lower floor can begin at a laterally outer position. If the motors extended on an axis parallel to the axis of the wheel, the motor would require a higher floor for more of the lateral width of the vehicle.

A preferred method of mounting the motors 36 to the vehicle is shown in Figure 9. The first 22 and second 23 vehicle suspension drive unit assemblies drive the wheels 19, 21 about the axis of rotation 26. As shown in Figure 10A, axis 26'is parallel to driving axle shaft 24 for the wheel 19 and extends through the center of the driving axle shaft 24. The driving axle shaft 24 drives a first wheel hub 28 which revolves about the axis 26 of the driving axle shaft 24.

A first suspension beam 29 extends transversely to the axis 26 of the driving axle shaft 24 and adjacent to the first wheel hub 28. As is known, suspension beams are utilized to interconnect a fixed wheel axle housing and brake assembly to suspension elements such as air springs. The first suspension beam 29 supports the electric motor 36 which generates the torque to drive the driving axle shaft 24. As shown in Figure 9, electric motor 36 defines the motor axis of rotation 38 which is transverse to the axis of rotation 26 of the driving axle shaft 24.

A gear box or gear housing 40 interconnects the electric motor 36 and the driving axle shaft 24 and includes a pinion gear 32 and ring gear 34, shown in Figure 10A. The motor drive shaft 42 extends from the electric motor 36, along the axis 38 defined by the electric motor 36, and is coupled to a coaxial pinion shaft 44 which drives the pinion gear 32. The pinion gear 32 meshes with the ring gear 34 which revolves about the axis 26 of the driving axle shaft 24. As the ring gear 34 rotates, it drives the driving axle shaft 24 which turns the wheel hub 28.

The motor drive shaft 42 is connected to pinion shaft 44 by a flexible coupling. As the vehicle 10 receives road load input, the suspension beam 29 will move and flex. The flexible coupling can include a flexible tube portion 45 made of known materials.

As shown in Figure 10A, the flexible coupling can also be a spherical joint 102. The spherical joint 102 comprises an inner portion 55 and an outer portion 57. The inner portion 55 has an inner flange 59 and the outer portion 57 has an outer flange 60. The inner flange 59 is joined to a gear box flange 62 and the outer flange 60 is joined to an electric motor flange 64. The inner portion 55 of the spherical joint 102 has a concave surface 66 which rotatably mates with a convex surface 68 of the outer portion 57. Therefore, the electric motor 36, attached to the outer portion 57 of the spherical joint 102, can pivot with respect to the gear box 40 which is attached to the inner portion 55 of the spherical joint 102. The center of the spherical joint 102 coincides with the center of the flexible coupling.

As shown in Figure 10B, the inner portion 55 and outer portion 57 of the spherical joint 102 do not extend about 360 degrees about a central axis. Instead, edges such as shown at 66E and 68E are cutoff from each of the members. In this way. the members may be easily assembled. When the inner portion 55 is moved into the outer portion 57, the outer portion 57 is moved to the position shown in phantom at 69. The outer portion is then turned to reach the assembled position such as shown in Figure 10A.

The flexible coupling could alternatively be a universal joint or Oldham joint 104, as shown in Figure 4 as a black box to simplify the overall figure. It should be understood, that known universal joint couplings including two yokes that are driven for rotation with each other, but which may pivot relative to each other about three axes, would be preferably utilized in this embodiment.

For both embodiments, a moveable connection 70 interconnects the electric motor 36 and the first suspension beam 29 at a position spaced apart from the flexible coupling which interconnects the motor drive shaft 42 and the pinion shaft 44. Connection 70 can also be of various forms. A preferred connection 70 includes an electric motor mount 72 and a suspension beam mount 74 that are pivotally connected by a pivot pin 76. As the first suspension beam 29 moves up and down in response to road load input, the axis 38 of the electric motor 36 pivots relative to the first suspension beam 29.

As shown in Figures 9 and 10A, suspension beam 29 forms a C-shaped extension 78 which has a first end 80 and a second end 82. The suspension beam mount 74 that interconnects with the motor mount 72 to form the connection 70 is mounted adjacent end 80 and near the C-shaped extension 78. A second suspension beam 86 extending in the opposite direction from the first suspension beam 29 also forms a C-shaped extension 88 with a first end 90 and a second end 92. A counterweight 94 is disposed near the first end 90 of the second suspension beam 86. The counterweight 94 compensates for weight imbalance resulting from the electric motor 36 being supported by the first suspension beam 29 in a location extending to one side of the axis 26 of the driving axle shaft 24. Without a counterweight 94, the weight imbalance could become evident when vehicle 10 experiences vertical accelerations due to road bumps, rail road tracks, etc. The counterweight 94 can be focused or spread over the length of the second suspension beam 86, and can be cast in place, added later by attaching a weight, or by pouring molten lead into a cavity (not shown) in the second suspension beam 86. Located near the second ends 82, 92 of the C-shaped extensions 78, 88 are circular pads 84 for mounting resilient suspension means (not shown) between the vehicle 10 and the first 29 and second 86 suspension beams. Typically air springs are mounted on pads 84.

The second suspension drive unit assembly, generally shown at 23, consisting of the same or similar components as the first suspension drive unit assembly 22 is interconnected to the first suspension drive unit assembly 22 by the support beam 58. The second suspension drive unit assembly 23 drives a second wheel hub 100, located opposite of the first wheel hub 28 but which also revolves about the axis 26 of the driving axle shaft 24. Packaging advantages exist if the electric motors 36 of the first 22 and second 23 suspension drive unit assemblies extend in the same direction from the support beam 58.

Another mounting method is shown in Figure 12. The motor 36 for driving wheel 19 is connected to the gear box or housing 40. The gear housing 40 may be a portion of the axle housing for the wheel 19. The ring gear or bevel gear 34 is shown for driving wheel 19. Ring gear 34 is preferably associated with appropriate gearing to drive wheel 19.

As shown, the gear housing 40 includes an open end 106. Open end 106 is closed by the attachment of motor 36. As shown, bolts 108 attach the gear housing flange 62 to the electric motor flange 64. Also, the drive pinion gear 32 engages and drives the ring gear 34. The pinion shaft 44 for the pinion gear 32 receives drive rotation from the motor output shaft 42. The shafts 42, 44 are interconnected by a flexible coupling 43.

As shown, the gear housing 40 incorporates an opposed mounting portion 110 at a side of a central drive axis X of rotation opposed from the mounting of the motor 36. As shown in greater detail in Figure 13, the mounting portion 110 includes a first bearing assembly 112 which mounts a shaft portion 114 for the pinion gear 32 and a second bearing assembly 116 which mounts the pinion shaft 44 for the pinion gear 32. It should be understood that the first 112 and second 116 bearing assemblies include at least one bearing, but a greater number of bearings can also be used. As shown in Figures 12 and 13, the first bearing assembly 112 includes three angular contact bearings and the second bearing assembly 116 includes a single bearing. It is necessary for pinion gear 32 to be adequately supported on bearings such that it is able to transmit sufficient torque to rotate wheel 19.

In this embodiment, the positioning of bearings on an opposed side of the axis X from motor 36 results in a smaller overall envelope required for the entire system shown in Figure 12. As shown, the bearings 112 are mounted in a bearing housing 118 having bearing support portions 120. Bearing housing 118 encloses an open end 122 of gear housing 40.

In order to assemble the opposed mounting portion 110 into the gear housing 40, the bearing housing 118 is inserted into the open end 122 of gear housing 40 such that the pinion gear 32 teeth and the ring gear 34 teeth do not mesh. After initial positioning of the opposed mounting portion 110, the bearing housing 118 is moved horizontally such that a flange portion 124 of the bearing housing 118 encloses the open end 122 of the gear housing 40 resulting in the meshing of pinion gear 32 teeth with ring gear 34 teeth.

With this embodiment, the electric motor 36 is mounted on one side of the gear housing 40, and drives the pinion gear 32, which is mounted on one side of the axis X. The positioning of the bearings 112 on the opposed side of the axis X from the motor 36 results in an envelope Y which does not extend far beyond the size required for wheel 19. The floor 18 of the vehicle 10 must rise to accommodate wheel 19, and must also extend longitudinally slightly forwardly and rearwardly from the wheel 19. Thus, by the inventive positioning of a good deal of the bearings, etc., for the gears and motors 36 withing the longitudinal envelope of the wheel 19, this embodiment does not require the floor 8 to move upwardly to cover the motor 36 and gearing by any significant longitudinal amount.

It should also be understood that a similar coupling is mounted at the opposed lateral side of the vehicle 10 and would drive its own wheel 21.

The invention has been described in an illustrative manner, and it is to be understood that the terminology which has been used is intended to be in the nature of words of description rather than of limitation.

Obviously, many modifications and variations of the present invention are possible in light of the above teachings. It is, therefore, to be understood that reference numerals are merely for convenience and are not to be in any way limiting, variations may be practiced otherwise than as specifically described. The scope of the invention is defined by the appended claims.

## Claims

1. An automotive vehicle drive unit assembly comprising:
a first driving axle shaft (24);
a second driving axle shaft (24), said first and second driving axle shafts (24) being co-linear and defining and axis of rotation (26);
a first wheel hub (28) driven by said first driving axle shaft (24);
a second wheel hub (28) driven by said second driving axle shaft (24), said first and second wheel hubs (28) driven about said axis of rotation (26);
a first gear set (30) and a first planetary gear set (46) for driving said first wheel hub (28);
a second gear set (30) and a second planetary gear set (46) for driving said second wheel hub (28);
a first electric motor (36) mounted at a non-parallel angle relative to said axis of rotation of said first driving axle shaft (24)for driving said first gear set (30);
a second electric motor (36) mounted at a non-parallel angle relative to said axis of rotation (26) of said second driving axle shaft (24) for driving said second gear set(30); **characterised in that** said
first and second planetary gear sets (46) are driven by said first and second gear sets (30) resulting in gear reduction.

2. An assembly as set forth in Claim 1, wherein said planetary gear sets (46) are incorporated into said wheel hubs (28).

3. An assembly as set forth in Claim 1, including a first gearbox (40) for housing said first gear set (30) and a second gearbox (40) for housing said second gear set (30), said first and second gearboxes (40) being mounted to said first and second electric motors (36) respectively and wherein said first and second planetary gear sets (46) are incorporated into first and second gearboxes (40).

4. An assembly as set forth in Claim 1, wherein said first gear set (30) includes a first pinion gear (32) in driving engagement with a first ring gear (34) mounted for rotation with said first wheel hub (28) and said second gear (30) set includes a second pinion gear (32) in driving engagement with a second ring gear (34) mounted for rotation with said second wheel hub (28).

5. An assembly as set forth in Claim 4, wherein said first planetary gear set (46) includes a first sun gear (48) mounted for rotation with said first ring gear (34) and a first plurality of planet gears (50) in meshing engagement with a first planetary ring gear hub (52) and said second planetary gear set (46) includes a second sun gear (48) mounted for rotation with said second ring gear (34) and a second plurality of planet gears (50) in meshing engagement with a second planetary ring gear hub (52)

6. An assembly as set forth in Claim 5, wherein said first planetary ring gear hub (52) drives said first wheel hub (28) and said second planetary ring gear hub (52) drives said second wheel hub(28).

7. An assembly as set forth in Claim 5, wherein said first planetary ring gear hub (52) drives said first driving axle shaft (24) and said second planetary ring gear hub (52) drives said second driving axle shaft (24).

8. An assembly as set forth in Claim 7, wherein said first gear set (30) and said first planetary gear set (46) are housed within a first common gearbox (40) mounted to said first electric motor (36) and said second gear set (30) and said second planetary gear set (46) are housed within a second common gearbox (40) mounted to said second electric motor (36).

9. An assembly as set forth in Claim 1, including a third electric motor (56) in parallel driving relationship with said first electric motor (36) to drive said first gear set (30) and a fourth electric motor (56) in parallel driving relationship with said second electric motor (36) to drive said second gear set (30) wherein said first (36) and third (56) electric motors drive said first gear set (30) and said second (36) and fourth (56) electric motors drive said second gear set (30) independently from each other.

10. An assembly as set forth in Claim 9, wherein said first (36) and said third (56) electric motors extend radially from said first gear set (30), and said second (36) and said fourth (56) electric motors extend radially from said second gear set (30).

11. An assembly as set forth in Claim 10, wherein said first gear set (30) includes a first pinion gear (32) driven by said first electric motor (36) and a second pinion gear (32) driven by said third electric motor (56), said first and second pinion gears (32) for simultaneously driving a first ring gear (34) and wherein said second gear set (30) includes a third pinion gear (32) driven by said second electric motor (36) and a fourth pinion gear (32) driven by said fourth electric motor (56), said third and fourth pinion gears (32) for simultaneously driving a second ring gear (34).

12. An assembly as set forth in Claim 11 wherein said first gear set (30) is housed within a first gearbox mounted to said first (36) and third (56) electric motors and said second gear set (30) is housed within a second gearbox (40) mounted to said second (36) and fourth (56) electric motors.

13. An assembly as set forth in Claim 1, wherein said non-parallel angle is a perpendicular angle.

14. An assembly as set forth in Claim 1, wherein one of said electric motors (36) is mounted at a 90 degree angle extending generally horizontally and forwardly relative to said axis of rotation (26) and the other of said electric motors (36) is mounted at a 90 degree angle extending generally horizontally and rearwardly relative to said axis of rotation (26).

15. An assembly as set forth in Claim 1 wherein said first and second electric motors (36) are supported by a common axle housing (58) extending along said axis of rotation (26).

16. An assembly as set forth in Claim 1, wherein said first and second motors (36) are mounted at a 90 degree angle extending generally vertically and upwardly from said axis of rotation (26).

17. An assembly as set forth in Claim 1, wherein said first and second motors (36) are mounted at an angle extending generally horizontally and rearwardly from said axis of rotation (26).

## Patentansprüche

1. Antriebseinheitsbaugruppe für ein Kraftfahrzeug, mit:
einer ersten Antriebsachswelle (24);
einer zweiten Antriebsachswelle (24), wobei die erste und die zweite Antriebsachswelle (24) kolinear sind und eine Drehachse (26) bilden;
einer ersten Radnabe (28), die durch die erste Antriebsachswelle (24) angetrieben wird;
einer zweiten Radnabe (28), die durch die zweite Antriebsachswelle (24) angetrieben wird, wobei die erste und die zweite Radnabe (28) um die Drehachse (26) herum angetrieben werden;
einem ersten Zahnradsatz (30) und einem ersten Planetenradsatz (46) zum Antreiben der ersten Radnabe (28);
einem zweiten Zahnradsatz (30) und einem zweiten Planetenradsatz (46) zum Antreiben der zweiten Radnabe (28);
einem ersten Elektromotor (36), der in einem nichtparallelen Winkel relativ zur Drehachse der ersten Antriebsachswelle (24) angebracht ist, um den ersten Zahnradsatz (30) anzutreiben;
einem zweiten Elektromotor (36), der in einem nichtparallelen Winkel relativ zur Drehachse (26) der zweiten Antriebsachswelle (24) angebracht ist, um den zweiten Zahnradsatz (30) anzutreiben; **dadurch gekennzeichnet, daß**
der erste und der zweiten Planetenradsatz (46) durch den ersten und den zweiten Zahnradsatz (30) angetrieben werden, was zu einer Untersetzung führt.

2. Baugruppe nach Anspruch 1, bei der die Planetenradsätze (46) in die Radnaben (28) eingebaut sind.

3. Baugruppe nach Anspruch 1, mit einem ersten Zahnradkasten (40) zum Unterbringen des ersten Zahnradsatzes (30) und einem zweiten Zahnradkasten (40) zum Unterbringen des zweiten Zahnradsatzes (30), wobei der erste und der zweite Zahnradkasten (40) an dem ersten bzw. zweiten Elektromotor (36) angebracht sind, und wobei der erste und der zweite Planetenradsatz (46) in den ersten und den zweiten Zahnradkasten (40) eingebaut sind.

4. Baugruppe nach Anspruch 1, bei welcher der erste Zahnradsatz (30) ein erstes Ritzel (32) umfaßt, das mit einem ersten Hohlrad (34) in Antriebseingriff steht, das so angebracht ist, daß es sich mit der ersten Radnabe (28) dreht, und der zweite Zahnradsatz (30) ein zweites Ritzel (32) umfaßt, das mit einem zweiten Hohlrad (34) in Antriebseingriff steht, das so angebracht ist, daß es sich mit der zweiten Radnabe (28) dreht.

5. Baugruppe nach Anspruch 4, bei welcher der erste Planetenradsatz (46) ein erstes Sonnenrad (48) umfaßt, das so angebracht ist, daß es sich mit dem ersten Hohlrad (34) dreht, und eine erste Vielzahl von Planetenrädern (50), die mit einer ersten Planetenhohlradnabe (52) in Eingriff stehen, und der zweiten Planetenradsatz (46) ein zweites Sonnenrad (48) umfaßt, das so angebracht ist, daß es sich mit dem zweiten Hohlrad (34) dreht, und eine zweite Vielzahl von Planetenrädern (50), die mit einer zweiten Planetenhohlradnabe (52) in Eingriff stehen.

6. Baugruppe nach Anspruch 5, bei der die erste Planetenhohlradnabe (52) die erste Radnabe (28) antreibt und die zweite Planetenhohlradnabe (52) die zweite Radnabe (28) antreibt.

7. Baugruppe nach Anspruch 5, bei der die erste Planetenhohlradnabe (52) die erste Antriebsachswelle (24) antreibt und die zweite Planetenhohlradnabe (52) die zweite Antriebsachswelle (24) antreibt.

8. Baugruppe nach Anspruch 7, bei welcher der erste Zahnradsatz (30) und der erste Planetenradsatz (46) in einem ersten gemeinsamen Zahnradkasten (40) untergebracht sind, der an dem ersten Elektromotor (36) angebracht ist, und der zweite Zahnradsatz (30) und der zweite Planetenradsatz (46) in einem zweiten gemeinsamen Zahnradkasten (40) untergebracht sind, der an dem zweiten Elektromotor (36) angebracht ist.

9. Baugruppe nach Anspruch 1, mit einem dritten Elektromotor (56), der in paralleler Antriebsbeziehung mit dem ersten Elektromotor (36) steht, um den ersten Zahnradsatz (30) anzutreiben, und mit einem vierten Elektromotor (56), der in paralleler Antriebsbeziehung mit dem zweiten Elektromotor (36) steht, um den zweiten Zahnradsatz (30) anzutreiben, wobei der erste (36) und der dritte (56) Elektromotor den ersten Zahnradsatz (30) antreiben und der zweite (36) und der vierte (56) Elektromotor unabhängig voneinander den zweiten Zahnradsatz (30) antreiben.

10. Baugruppe nach Anspruch 9, bei der sich der erste (36) und der dritte (56) Elektromotor radial von dem ersten Zahnradsatz (30) aus erstrecken und sich der zweite (36) und der vierte (56) Elektromotor radial von dem zweiten Zahnradsatz (30) aus erstrecken.

11. Baugruppe nach Anspruch 10, bei welcher der erste Zahnradsatz (30) ein erstes Ritzel (32) umfaßt, das durch den ersten Elektromotor (36) angetrieben wird, und ein zweites Ritzel (32), das durch den dritten Elektromotor (56) angetrieben wird, wobei das erste und das zweite Ritzel (32) dazu dienen, gleichzeitig ein erstes Hohlrad (34) anzutreiben, und bei welcher der zweite Zahnradsatz (30) ein drittes Ritzel (32) umfaßt, das durch den zweiten Elektromotor (36) angetrieben wird, und ein viertes Ritzel (32), das durch den vierten Elektromotor (56) angetrieben wird, wobei das dritte und das vierte Ritzel (32) dazu dienen, gleichzeitig ein zweites Hohlrad (34) anzutreiben.

12. Baugruppe nach Anspruch 11, bei welcher der erste Zahnradsatz (30) in einem ersten Zahnradkasten untergebracht ist, der an dem ersten (36) und dem dritten (56) Elektromotor angebracht ist, und der zweite Zahnradsatz (30) in einem zweiten Zahnradkasten (40) untergebracht ist, der an dem zweiten (36) und dem vierten (56) Elektromotor angebracht ist.

13. Baugruppe nach Anspruch 1, bei welcher der nichtparallele Winkel ein rechter Winkel ist.

14. Baugruppe nach Anspruch 1, bei der einer der Elektromotoren (36) in einem 90°-Winkel angebracht ist, der sich relativ zur Drehachse (26) im allgemeinen horizontal und nach vorn erstreckt, und der andere der Elektromotoren (36) in einem 90°-Winkel angebracht ist, der sich relativ zur Drehachse (26) im allgemeinen horizontal und nach hinten erstreckt.

15. Baugruppe nach Anspruch 1, bei welcher der erste und der zweite Elektromotor (36) von einem gemeinsamen Achsgehäuse (58) getragen werden, das sich längs der Drehachse (26) erstreckt.

16. Baugruppe nach Anspruch 1, bei welcher der erste und der zweite Motor (36) in einem 90°-Winkel angebracht sind, der sich im allgemeinen vertikal und von der Drehachse (26) nach oben erstreckt.

17. Baugruppe nach Anspruch 1, bei welcher der erste und der zweite Motor (36) in einem Winkel angebracht sind, der sich im allgemeinen horizontal und von der Drehachse (26) nach hinten erstreckt.

## Revendications

1. Un ensemble d'unité de transmission de véhicule automobile comprenant:
- un premier arbre de transmission de roue motrice (24);
- un deuxième arbre de transmission de roue motrice (24), les premier et deuxième arbres de transmission de roue motrice (24) étant colinéaires et définissant un axe de rotation (26),
- un premier moyeu de roue (28) entraîné par ledit premier arbre de transmission de roue motrice (24) ;
- un deuxième moyeu de roue (28) entraîné par ledit deuxième arbre de transmission de roue motrice (24), lesdits premier et deuxième moyeux de roues (28) étant entraînés en rotation autour dudit axe de rotation (26) ;
- un premier couple d'engrenage (30) et un premier train d'engrenage planétaire (46) pour entraîner ledit premier moyeu de roue (28) ;
- un deuxième couple d'engrenage (30) et un deuxième train d'engrenages planétaire (épicycloïdal) (46) pour entraîner ledit deuxième moyeu de roue (28),
- un premier moteur électrique (36) monté selon un angle non parallèle par rapport audit axe de rotation dudit premier arbre de transmission de roue motrice (24) pour entraîner ledit premier couple d'engrenage (30) ;
- un deuxième moteur électrique (36) monté selon un angle non parallèle par rapport audit axe de rotation (26) dudit deuxième arbre de transmission de roue motrice (24) pour entraîner ledit deuxième couple d'engrenage (30) ;
**caractérisé en ce que** lesdits premier et deuxième trains planétaires (46) sont entraînés par lesdits premier et deuxième ensembles d'engrenages (30), en constituant un rapport de réduction du couple.

2. Un ensemble selon la revendication 1, dans lequel lesdits trains d'engrenages planétaires (46) sont incorporés dans lesdits moyeux de roues (28).

3. Un ensemble selon la revendication 1, comprenant un premier carter à engrenages (40) pour loger ledit premier couple d'engrenage (30) et un deuxième carter à engrenages (40) pour loger ledit deuxième train d'engrenage (30), lesdites premier et deuxième carters à engrenages (40) étant montées respectivement sur lesdits premier et deuxième moteurs électriques (36) et dans lequel lesdits premier et deuxième trains d'engrenages planétaires (46) sont incorporés dans les premier et deuxième carters à engrenages (40).

4. Un ensemble selon la revendication 1, dans lequel ledit premier couple d'engrenage (30) comprend un premier pignon d'engrenage (32) en prise pour transmission avec une première couronne dentée (34) montée à rotation avec ledit premier moyeu de roue (28) et ledit deuxième couple d'engrenage (30) comprend un deuxième pignon d'engrenage (32) en prise de transmission avec une deuxième couronne dentée (34) montée à rotation avec ledit deuxième moyeu de roue (28).

5. Un ensemble selon la revendication 4, dans lequel ledit premier train d'engrenages planétaire (46) comprend une première roue d'engrenage planétaire (48) montée à rotation avec ladite première couronne dentée (34) et une première pluralité de satellites (50) s'engrenant avec un premier moyeu à couronne dentée planétaire (52) et ledit deuxième train planétaire (46) comprend une deuxième roue d'engrenage planétaire (48) monté à rotation avec ladite deuxième couronne dentée (34) et une deuxième pluralité de satellites (50) s'engrenant avec un deuxième moyeu à couronne dentée planétaire (52).

6. Un ensemble selon la revendication 5, dans lequel ledit premier moyeu à couronne dentée planétaire (52) entraîne ledit premier moyeu de roue (28) et ledit deuxième moyeu à couronne dentée planétaire (52) entraîne ledit deuxième moyeu de roue (28).

7. Un ensemble selon la revendication 5, dans lequel ledit premier moyeu à couronne dentée planétaire (52) entraîne ledit premier arbre de transmission de roue motrice (24) et ledit deuxième moyeu à couronne dentée planétaire (52) entraîne ledit deuxième arbre de transmission de roue motrice (24).

8. Un ensemble selon la revendication 7 dans lequel ledit premier couple d'engrenage (30) et ledit premier train d'engrenage planétaire (46) sont logés à l'intérieur d'un premier carter à engrenages commun (40) monté sur ledit premier moteur électrique (36) et ledit deuxième couple d'engrenage (30) et ledit deuxième train d'engrenages planétaire (46) sont logés à l'intérieur d'un deuxième carter à engrenages commun (40) monté sur ledit deuxième moteur électrique (36).

9. Un ensemble selon la revendication 1, comprenant un troisième moteur électrique (56) en relation de transmission parallèle avec ledit premier moteur électrique (36) pour entraîner ledit premier couple d'engrenage (30) et un quatrième moteur électrique (56) en relation de transmission parallèle avec ledit deuxième moteur électrique (36) pour entraîner ledit deuxième couple d'engrenage (30), dans lequel lesdits premier (36) et troisième (56) moteur électriques entraînent ledit premier couple d'engrenage (30) et lesdits deuxième (36) et quatrième (56) moteurs électriques entraînent ledit deuxième couple d'engrenage (30) indépendamment l'un de l'autre.

10. Un ensemble selon la revendication 9, dans lequel ledit premier (36) et ledit troisième (56) moteurs électriques s'étendent radialement à partir dudit premier couple d'engrenage (30), et lesdits deuxième (36) et quatrième (56) moteurs électriques s'étendent radialement à partir dudit deuxième couple d'engrenage (30).

11. Un ensemble selon la revendication 10, dans lequel ledit premier couple d'engrenage (30) comprend un premier pignon d'engrenage (32) entraîné par ledit premier moteur électrique (36) et un deuxième pignon d'engrenage (32) entraîné par ledit troisième moteur électrique (56), lesdits premier et deuxième pignon d'engrenages (32) entraînant simultanément une première couronne dentée (34) et dans lequel ledit deuxième couple d'engrenage (30) comprend un troisième pignon d'engrenage (32) entraîné par ledit deuxième moteur électrique (36) et un quatrième pignon d'engrenage (32) entraîné par ledit quatrième moteur électrique (56), lesdits troisième et quatrième pignon d'engrenage (32) entraînant simultanément une deuxième couronne dentée (34).

12. Un ensemble selon la revendication 11, dans lequel ledit premier couple d'engrenage (30) est logé à l'intérieur d'un premier carter à engrenages montée sur lesdits premier (36) et troisième (56) moteurs électriques et ledit deuxième couple d'engrenage (30) est logé à l'intérieur d'un deuxième carter à engrenages (40) monté sur lesdits deuxième (36) et quatrième (56) moteurs électriques.

13. Un ensemble selon la revendication 1, dans lequel ledit angle non parallèle est un angle droit.

14. Un ensemble selon la revendication 1, dans lequel l'un desdits moteurs électriques (36) est monté selon un angle de 90 degrés s'étendant en général horizontalement et vers l'avant par rapport audit axe de rotation (26) et l'autre desdits moteurs électriques (36) est monté selon un angle de 90 degrés s'étendant en général horizontalement et vers l'arrière par rapport audit axe de rotation (26).

15. Un ensemble selon la revendication 1 dans lequel lesdits premier et deuxième moteurs électriques (36) sont supportés par un carter d'essieu commun (58) s'étendant le long dudit axe de rotation (26).

16. Un ensemble selon la revendication 1, dans lequel lesdits premier et deuxième moteurs (36) sont montés selon un angle de 90 degrés s'étendant en général verticalement et vers le haut à partir dudit axe de rotation (26).

17. Un ensemble selon la revendication 1, dans lequel lesdits premier et deuxième moteurs (36) sont montés selon un angle s'étendant en général horizontalement et vers l'arrière dudit axe de rotation (26).
